# EUROPEAN PATENT APPLICATION

(11) **EP 4 446 044 A1**
(43) Date of publication of application: **16.10.2024**
(21) Application number: 23167845.9
(22) Date of filing: 13.04.2023
(51) Int. Cl.: B23K 26/24, B23K 26/244, B23K 26/28, F28D 9/00, B23K 31/02

(54) **A METHOD FOR PRODUCING A PLATE HEAT EXCHANGER**

(71) Applicant: VALEO SYSTEMES THERMIQUES, 78320 Le Mesnil Saint-Denis (FR)
(72) Inventor: FERNANDEZ, Roberto, 50011 Zaragoza (ES); JIMENEZ, Jesus, 50011 Zaragoza (ES); MALLEN, Alberto, 50011 Zaragoza (ES)
(74) Representative: Valeo Systèmes Thermiques

(57) **Abstract**

A method (300) for producing a plate heat exchanger (100) is disclosed. The method (300) comprising steps of arranging a first plate (102) and a second plate (104) one over another, and joining, by laser beam welding, the first plate (102) and the second plate (104) to one another forming the plate heat exchanger (100). At least a portion of at least one welding seam trajectory (w-1, w-2, w-3, w-4) on the plate heat exchanger (100) is produced by at least two welding seams (110-1, 110-2, 110-3...110-n) forming at least one overlapped welding seam (112-1, 112-2, 112-3...112-n).

## Description

### FIELD OF INVENTION

The present invention relates to a battery cooling system of vehicles, more specifically, the present invention relates to a plate heat exchanger and a method for producing the plate heat exchanger.

### BACKGROUND

Thermal management system is vital for efficient operation of a battery pack in vehicles such as electric vehicles and hybrid-electric vehicles. The battery pack is an energy source of such a vehicle and provide required power to traction motors and other electric and/or electronic components. The battery pack includes a plurality of rechargeable battery cells and has a narrow operating temperature range, therefore the battery pack must be maintained within that specified operating temperature range to operate efficiently. During hot conditions and/or vehicle operating conditions, the batteries need to be cooled to maintain the battery pack temperatures within the specified operating temperature range, and whereas in cold conditions, the batteries need to be warmed to reach the optimum temperature. Deviation of battery pack's temperature from the specified temperature range can impede battery pack performance, and reduce battery efficiency and durability. Sometimes, the batteries can be permanently damaged or destroyed due to deviation of the battery pack temperature outside the specified temperature range, and overheating of the battery cells can even result in fires and other safety related issues.

In addition, a conventional battery thermal management system, such as a plate heat exchanger type, includes a base plate and a channel plate, both assembled to each other and collectively forming fluid flow passages therebetween. The channel plate, disposed underneath and abutting the base plate, is formed with interconnected channels to define the fluid flow passages between the base plate and the channel plate. The fluid flowing through the fluid flow passages can extract heat from or supply heat to the batteries disposed over the base plate for cooling or heating the batteries.

Generally, the base plate and the channel plate are joined to each other through welding. However, there are issues in the welding of both the base plate and the channel plate, one of the main issue is the welding of the intermediate spaces between the channels. Mainly in the cases when the welding is done following a trajectory that is not closed, i.e. an open loop welding trajectory. In this case, the welding is done between two points, where one point is considered as the beginning point of the welding from where the welding starts and another point is considered as the end point of the welding where welding stops. Generally, in such welding, there is possibility of occurrence of cracks at the end point of the welding line/trajectory due to the hot cracking phenomena.

Therefore, there is a need of an efficient and cost-effective solution to avoid the occurrence of cracks due to the hot cracking phenomena at the end of the weld line of the welding.

### SUMMARY

The present invention discloses a method for producing a heat exchanger, such as a plate heat exchanger. The disclosed method can efficiently overcome the above-mentioned problem of crack formation at the weld end point while joining plates of the plate heat exchanger by laser beam welding.

In accordance with an embodiment of the present invention, the disclosed method includes a step of arranging a first plate and a second plate one over another. Further, the disclosed method includes joining the first plate and the second plate to one another, forming the plate heat exchanger, by welding. At least a portion of at least one welding seam trajectory on the plate heat exchanger is produced by at least two welding seams forming at least one overlapped welding seam.

Neighboring portions of the at least two welding seams are overlapped forming the at least one overlapped welding seam. Therefore, formation of cracks at the end points of the welding lines can be avoided, as the ends points and/or beginning points of the welding lines/seams can lie in the middle portion of the welding trajectory and/or on the overlapped welding seam which is formed by overlapping the welding seams for a certain length.

In an embodiment, at least two distal points of the at least one welding seam trajectory are considered beginning points for the welding and welding continued for a distance such that the at least two welding seams are overlapped and ends points of the welding seams lie on the at least one overlapped welding seam.

In another embodiment, at least one end point and at least one beginning point of the at least two welding seams can lie on the at least one overlapped welding seam.

In another embodiment, at least two beginning points of the at least two welding seams can lie on the at least one overlapped welding seam.

At least one of the first plate and the second plate is formed with channels to define at least one fluid flow passage between the first plate and the second plate. In addition, the first plate and the second plate are welded together in between the channels.

Welding in edge regions of the first plate and the second plate is carried out such that the at least one fluid flow passage is surrounded in liquid-tight manner by a periphery welding seam.

In an embodiment, the welding can be, but not limited to, a laser beam welding. In addition, the welding velocity can be in a range of 12 to 20 meter/minute.

In addition, laser beam welding is performed with a protective gas selected from a group of gases including argon, carbon dioxide, and helium.

### BRIEF DESCRIPTION OF DRAWINGS

Other characteristics, details and advantages of the invention may be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1A illustrates an isometric view of a plate heat exchanger, in accordance with an embodiment of the present invention;
FIG. 1B illustrates an exploded view of a plate heat exchanger of FIG. 1;
FIG. 1C illustrates an sectional view of a plate heat exchanger of FIG. 1;
FIG. 2 illustrates a second plate with weld lines of a plate heat exchanger of FIG. 1; and
FIG. 3 illustrates a flow diagram of a method for producing a plate heat exchanger, in accordance with an embodiment of the present invention.

### DETAILED DESCRIPTION

It must be noted that the figures disclose the invention in a detailed enough way to be implemented, said figures helping to better define the invention if needs be. The invention should however not be limited to the embodiment disclosed in the description.

The present invention is explained in the forthcoming description and the accompanying drawings with an example of a plate heat exchanger for cooling batteries, particularly a method for producing a plate heat exchanger to prevent crack formation at the weld end points while welding plates of the plate heat exchanger. Proposed method proposes a welding technique wherein at least a portion of at least one welding seam trajectory on the plate heat exchanger is produced by at least two welding seams forming an overlapped welding seam, wherein ends points of welding seams and/or one end point and one beginning points of welding seams and/or two beginning point of the welding seams lie on the overlapped welding seam, which can prevent crack formations due to the hot cracking phenomena at the end points and/or the beginning points of the welding or the welding trajectory.

It is to be appreciated that though the concept of the present invention has been described for joining plates of a plate heat exchanger of a vehicle, however the concept of the present invention is also applicable for any vehicular and non-vehicular environment applications where it is required to weld two to more overlapped plates and the welding trajectory is open loop and/or closed, all such applications are within scope of the present invention without any limitations whatsoever.

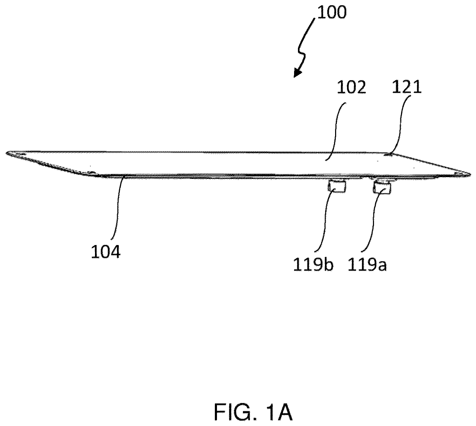

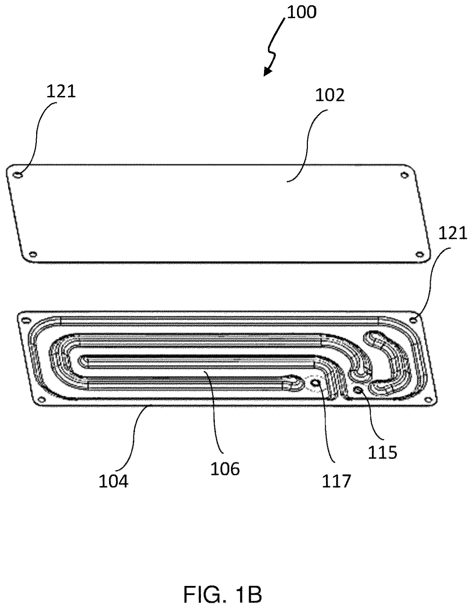

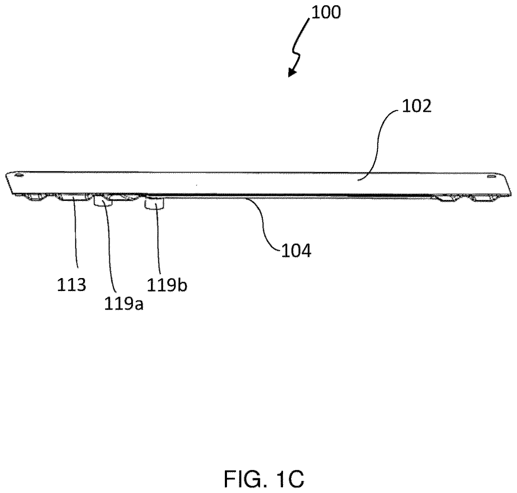

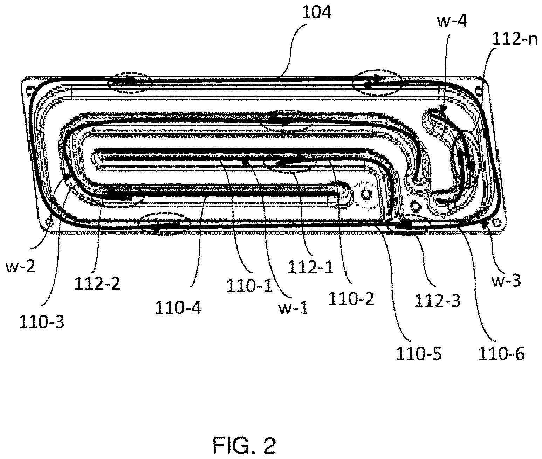

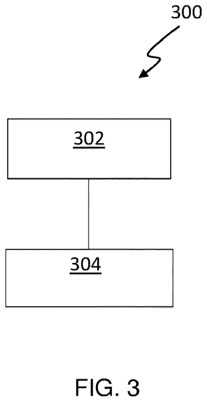

Referring to FIG. 3 where a method 300 for producing a plate heat exchanger 100, such as one shown in FIG. 1A to FIG. 1C, is shown, in accordance with an embodiment of the present invention. The proposed method 300 includes at step 302, arranging a first plate 102 and a second plate 104 one over another. The method further includes at step 304, joining the first plate 102 and the second plate 104 to one another, forming the plate heat exchanger 100 by welding, such as laser beam welding. At least a portion of at least one laser welding seam trajectory such as, but not limited to, welding trajectories w-1, w-2, w-3 and w-4 (as shown in FIG. 2) on the plate heat exchanger 100 is produced by at least two laser welding seams, such as welding seams 110-1, 110-2, 110-3...110-n (hereinafter, collectively known as welding seams 110), forming at least one overlapped laser welding seam, such as overlapped welding seams 112-1, 112-2, 112-3...112-n (hereinafter, collectively referred to as overlapped welding seams 112).

In an embodiment, the laser beam welding ensures high strength of the welded joint between the first plate 102 and the second plate 104. In an embodiment, welding velocity can be in a range of 12 to 20 meter/minute.

At least one of the first plate 102 and the second plate 104 can be formed with channels 106 to define at least one fluid flow passage, such as fluid flow passages 113, between the first plate 102 and the second plate 104. For instance, the second plate 104 is provided with the channels 106. The channels 106 can be interconnected. The channels on the second plate 104 can be formed by way of embossing, deep drawing and/or another forming method. In another embodiment, it is also possible for both of the plates 102 and 104 to include channels/depressions. The fluid flows through the fluid flow passages 113 defined by the channels 106 can extract heat from or supply heat to articles, such as but not limited to batteries, disposed over the first plate 102 for cooling or heating the batteries.

Opposite facing surfaces of the first plate 102 and the second plate 104 abut with each other at least in a region in between the channels 106 and edge regions. In addition, the first plate 102 and the second plate 104 can be welded together in between the channels 106 and the edge regions.

Further, neighboring portions of the at least two welding seams 110-1, 110-2, 110-3...110-n can be overlapped forming the overlapped welding seams 112-1, 112-2, 112-3...112-n in a portion of the at least one welding trajectories w-1, w-2, w-3 and w-4. This overlapping of the welding seams, particularly at the end portions and/or beginning portions, can prevent crack formations due to the hot cracking phenomena at the end points of the welding or the welding trajectory.

In an embodiment, while joining the first plate 102 and the second plate 104 by laser beam welding, at least two distal points of the at least one welding seam trajectory, such as the welding seam trajectory w-1, can be considered beginning points (indicated by line end without arrow head) for the welding and welding continued for a distance such that the at least two welding seams, such as welding seams 110-1 and 110-2 are overlapped and ends points (indicated by line end with arrow head) of the welding seams 110-1 and 110-2 lie on the overlapped welding seam 112-1 (encircled by a dotted circle). The overlapped welding seams 112 can be at any portion of the welding seam trajectories. For instance, the overlapped welding seam 112-1 is in middle portion of the welding seam trajectory w-1.

In another embodiment, two neighboring portion of the two welding seams 110-3 and 110-4 with one end point and one beginning point can be overlapped to form the overlapped welding seam 112-2 and the one end point and the one beginning point of the welding seams 110-3 and 110-4 can lie on the at least one overlapped welding seam 112-2.

In another embodiment, two neighboring portion of the two welding seams 110-5 and 110-6 with the beginning points can overlapped to form the overlapped welding seam 112-3 and two beginning points of the two welding seams 110-5 and 110-6 lie on the overlapped welding seam 112-3.

The proposed method 300 can further include welding in edge regions of the first plate 102 and the second plate 104. The welding in the edge regions can be carried out such that the at least one fluid flow passage 113 is surrounded in liquid-tight manner by the periphery welding seam.

In an embodiment, laser beam welding is performed with a protective gas that can be selected from a group of gases including argon, carbon dioxide, and helium. The protective gas is projected toward the area to be welded. In this way, while welding, triggered oxidation reaction can be minimized and/or cooling of the metal plates is achieved.

In addition, at least one of the first plate 102 and the second plate 104 includes one or more openings, such as an inlet opening 115 and an outlet opening 117, for ingress and/or egress of a fluid with respect to the at least one fluid flow passage. For instance, the second plate 104 is provided with the inlet opening 115 and an outlet opening 117. In addition, fluid connectors, such as an inlet fluid connector 119a and an outlet fluid connector 119b, can be provided with the inlet opening 115 and the outlet opening 117 for ingress and egress of the fluid with respect to the fluid flow passages 113. The fluid connectors 119a and 119b can project from the second plate 104. In an embodiment, the fluid connectors 119a and 119b can comprise a disk- or flange-shaped end piece and can be welded onto the second plate in the region around the through inlet and outlet openings 115 and 117. In another embodiment, the fluid connectors 119a and 119b can be integrally formed from the second plate 104.

In an embodiment, materials that can be used for the first plate 102 and the second plate 104 can be selected from a group of material including aluminum, aluminum alloys, copper, copper alloys, metallized plastic, and stainless steel. In addition, the first plate 102 and the second plate 104 to be joined can have different composition, thickness and shape.

The plate heat exchanger 100 can be mounted on a frame of the vehicle. Screw holes 121 can be provided on corners of the first plate 102 and the second plate 104 for screwing the plate heat exchanger 100 to the frame of the vehicle. In addition, several plate heat exchangers 100 can be arranged horizontally next to one another to utilize the installation space in the vehicle in the best possible manner to cool the entire batteries across the full surface area to the greatest extent possible.

In any case, the invention cannot and should not be limited to the embodiments specifically described in this document, as other embodiments might exist. The invention shall spread to any equivalent means and any technically operating combination of means.

## Claims

1. A method (300) for producing a heat exchanger (100) comprising steps of:
arranging a first plate (102) and a second plate (104) one over another; and
joining the first plate (102) and the second plate (104) to one another, forming the heat exchanger (100), by welding, wherein at least a portion of at least one welding seam trajectory (w-1, w-2, w-3, w-4) on the heat exchanger (100) is produced by at least two welding seams (110-1, 110-2, 110-3...110-n) forming at least one overlapped welding seam (112-1, 112-2, 112-3...112-n).

2. The method (300) as claimed in the previous claim, wherein the welding is a laser beam welding.

3. The method (300) as claimed in any of the previous claims, wherein neighboring portions of the at least two welding seams (110-1, 110-2, 110-3...110-n) are overlapped forming the at least one overlapped welding seam (112-1, 112-2, 112-3...112-n).

4. The method (300) as claimed in any of the previous claims, wherein at least two distal points of the at least one welding seam trajectory (w-1, w-2, w-3, w-4) are considered beginning points for the welding and welding continued for a distance such that the at least two welding seams (110-1, 110-2, 110-3...110-n) are overlapped and ends points of the welding seams lie on the at least one overlapped welding seam (112-1, 112-2, 112-3...112-n).

5. The method (200) as claimed in any of the previous claims, wherein at least one end point and at least one beginning point of the at least two welding seams (110-1, 110-2, 110-3...110-n) lie on the at least one overlapped welding seam (112-1, 12-2, 112-3... 112-n).

6. The method (200) as claimed in any of the previous claims, wherein at least two beginning points of the at least two welding seams (110-1, 110-2, 110-3...110-n) lie on the at least one overlapped welding seam (112-1, 12-2, 112-3...112-n).

7. The method (300) as claimed in any of the previous claims, wherein at least one of the first plate (102) and the second plate (104) is formed with channels (106) to define at least one fluid flow passage (113) between the first plate (102) and the second plate (104), and wherein the first plate (102) and the second plate (104) are welded together in between the channels (106).

8. The method (300) as claimed in any of the previous claims, wherein welding in edge regions of the first plate (102) and the second plate (104) is carried out such that the at least one fluid flow passage (113) is surrounded in liquid-tight manner by a periphery welding seam.

9. The method (300) as claimed in any of the previous claims, wherein welding velocity is in a range of 12 to 20 meter/minute.

10. The method (300) as claimed in any of the previous claims, wherein welding is performed with a protective gas selected from a group of gases including argon, carbon dioxide, and helium.
